# EUROPÄISCHE PATENTSCHRIFT

(11) **EP 2 960 438 B1**
(45) Veröffentlichungstag und Bekanntmachung des Hinweises auf die Patenterteilung: **02.09.2020**
(21) Anmeldenummer: 15172844.1
(22) Anmeldetag: 19.06.2015
(51) Int. Cl.: F04D 29/64, F01D 17/16, F01D 9/04, F04D 29/56

(54) **LEITSCHAUFELVORRICHTUNG FÜR EINE GASTURBINE SOWIE GASTURBINE MIT EINER SOLCHEN LEITSCHAUFELVORRICHTUNG**
VARIABLE GUIDE VANE DEVICE FOR A GAS TURBINE AND GAS TURBINE EQUIPPED WITH SUCH A DEVICE
SYSTÈME D'AUBES DE GUIDAGE VARIABLES POUR UNE TURBINE À GAZ ET TURBINE À GAZ DOTÉE D'UN TEL SYSTÈME

(30) Priorität: 26.06.2014 DE 102014212310
(43) Veröffentlichungstag der Anmeldung: 30.12.2015
(73) Patentinhaber: MTU Aero Engines AG, 80995 München (DE)
(72) Erfinder: Böck, Alexander, 82288 Kottgeisering (DE)

(56) Entgegenhaltungen:
- EP-A2- 1 757 775
- EP-A2- 2 518 273
- GB-A- 1 201 949
- US-A- 3 558 237
- US-A- 4 834 613
- US-A- 5 354 174

## Beschreibung

Die Erfindung betrifft eine Leiteinrichtung für eine Gasturbine, insbesondere für ein Flugtriebwerk, gemäß dem Oberbegriff von Patentanspruch 1, eine Gasturbine, insbesondere ein Flugtriebwerk, mit einer solchen Leiteinrichtung sowie ein Verfahren zur Montage einer solchen Leiteinrichtung.

Eine derartige Leiteinrichtung für eine Gasturbine ist der EP 2 554 794 A2 als bekannt zu entnehmen. Die Leiteinrichtung umfasst wenigstens ein Gehäuseelement sowie wenigstens ein in radialer Richtung innenseitig des Gehäuseelements angeordnetes, erstes Kanalsegment. Durch das erste Kanalsegment ist zumindest ein von einem Gas durchströmbarer Kanal in radialer Richtung nach außen wenigstens teilweise begrenzt. Die bekannte Leiteinrichtung umfasst ferner wenigstens ein in radialer Richtung innenseitig des ersten Kanalsegments angeordnetes, zweites Kanalsegment, durch welches der Kanal in radialer Richtung nach innen wenigstens teilweise begrenzt ist. Darüber hinaus umfasst die Leiteinrichtung wenigstens eine zumindest teilweise in dem Kanal angeordnete Leitschaufel, welche relativ zu dem Gehäuseelement und relativ zu den Kanalsegmenten um eine Drehachse drehbar ist. Der Kanal ist beispielsweise als Ringkanal oder Ringraum ausgebildet und dient zum Führen des Gases, das eine hohe Temperatur aufweisen und somit ein sogenanntes Heißgas sein kann. Die Leitschaufel dient zum Ablenken oder Umlenken des den Kanal durchströmenden Gases und ist zwischen wenigstens zwei voneinander unterschiedlichen Stellungen um die Drehachse drehbar. Sind beispielsweise mehrere, in Umfangsrichtung aufeinanderfolgend angeordnete und relativ zu dem Gehäuseelement und den Kanalsegmenten bewegbare, insbesondere drehbare, Leitschaufeln vorgesehen, so kann dadurch ein variables Leitgitter der Gasturbine geschaffen werden. Durch Drehen der Leitschaufeln können die Leitschaufeln und somit die Gasturbine insgesamt an unterschiedliche Betriebspunkte bedarfsgerecht angepasst werden, so dass sich ein effizienter Betrieb der Gasturbine realisieren lässt.

Die WO 2005/047656 A1 offenbart ein Leitschaufelgitter für eine Turbomaschine, insbesondere für eine Gasturbine, mit mehreren in einem Ringraum beziehungsweise einem Hauptströmungskanal positionierten, feststehenden Leitschaufeln. Die Leitschaufeln sind um jeweils eine Schwenkachse verstellbar ausgebildet und grenzen mit radial innenliegenden Enden an eine erste Begrenzungsfläche des Ringraums und mit radial außenliegenden Enden an eine zweite Begrenzungsfläche des Ringraums an. Dabei ist vorgesehen, dass die erste Begrenzungsfläche des Ringraums und/oder die zweite Begrenzungsfläche des Ringraums derart ausgestaltet ist, dass in jeder Schwenkposition der Leitschaufeln Spalte zwischen den radial innenliegenden Enden der Leitschaufeln und der ersten Begrenzungsfläche des Ringraums und/oder Spalte zwischen den radial außenliegenden Enden der Leitschaufeln und der zweiten Begrenzungsfläche des Ringraums minimiert sind.

Darüber hinaus offenbart die EP 0 757 161 A2 eine Halteanordnung einer Leitschaufel an einem Gehäuse eines Verdichters für eine Gasturbine, wobei die Leitschaufel über eine Buchse an dem Gehäuse gelagert ist. Die Buchse ist dabei zumindest teilweise in einer Bohrung des Gehäuses aufgenommen.

Aus der US 3 558 237 A ist eine Turbinendüse mit einem Montagering, der ein Lagermittel zum Koppeln variabel einstellbarer Schaufeln mit dem Montagering aufweist, einer Reihe variabel einstellbarer Schaufeln, die mit dem Montagering gekoppelt sind, einem Ring aus porösem Material, der von dem Montagering beabstandet ist, um eine Kammer zwischen den Ringen auszubilden, Mitteln zur Zufuhr eines Kühlfluids zu der Kammer und wenigstens einem Schnappring bekannt, der elastisch an dem Montagering festgelegt ist.

Eine Aufgabe der vorliegenden Erfindung ist es, eine Gasturbine und/oder deren Montage zu verbessern, insbesondere eine Leiteinrichtung der eingangs genannten Art sowie eine Gasturbine, insbesondere ein Flugtriebwerk mit einer solchen Leiteinrichtung zu schaffen, mittels welchen sich eine besonders einfache Montage der Leiteinrichtung sowie ein besonders effizienter Betrieb der Gasturbine realisieren lassen.

Diese Aufgabe wird durch eine Leiteinrichtung mit den Merkmalen des Patentanspruchs 1 eine Gasturbine mit den Merkmalen des Patentanspruchs 13 bzw. durch ein Verfahren mit den Merkmalen des Patentanspruchs 14 gelöst. Vorteilhafte Ausgestaltungen mit zweckmäßigen Weiterbildungen der Erfindung sind in den übrigen Ansprüchen angegeben.

Nach der vorliegenden Erfindung umfasst eine solche Leiteinrichtung für eine Gasturbine, insbesondere für ein Flugtriebwerk, insbesondere eines Verdichters oder einer Turbine der Gasturbine, wenigstens ein Gehäuseelement, wenigstens ein in radialer Richtung innenseitig des Gehäuseelements angeordnetes, erstes Kanalsegment und wenigstens ein in radialer Richtung innenseitig des ersten Kanalsegments angeordnetes, zweites Kanalsegment. Durch das erste Kanalsegment ist zumindest ein von einem Gas durchströmbarer Kanal in radialer Richtung nach außen wenigstens teilweise begrenzt. Durch das zweite Kanalsegment ist der Kanal in radialer Richtung nach innen wenigstens teilweise begrenzt. Die Leiteinrichtung umfasst darüber hinaus wenigstens eine zumindest teilweise in dem Kanal angeordnete Leitschaufel, welche relativ zu dem Gehäuseelement und relativ zu den Kanalsegmenten um eine Drehachse drehbar ist.

Die radiale Richtung steht in einer Ausführung senkrecht auf einer Drehachse der Gasturbine, insbesondere einer Axialrichtung bzw. Hauptmaschinenachse bzw. Drehachse eines laufschaufeltragenden Rotors der Gasturbine, und ist von dieser weg nach außen gerichtet, so dass ein der Drehachse näheres Bauteil radial innen (angeordnet) ist.

Insbesondere, um nun eine, insbesondere besonders, einfache Montage der Leiteinrichtung und/oder einen, insbesondere besonders, effizienten Betrieb der Gasturbine insgesamt realisieren zu können, ist es in einer Ausführung vorgesehen, dass das zweite Kanalsegment an der Leitschaufel befestigt und an dem Gehäuseelement über die Leitschaufel gehalten ist. Zusätzlich kann in einer Ausführung die Leitschaufel an dem Gehäuseelement über eine Buchse gelagert sein, welche in radialer Richtung von außen nach innen in eine Durchgangsöffnung des Gehäuseelements eingesteckt ist.

Dieser Ausführung liegt insbesondere die Erkenntnis zugrunde, dass bei üblichen Leiteinrichtungen manchmal große Spalte der Leitschaufel zum beispielsweise als Ringraum oder Ringkanal ausgebildeten Kanal, das heißt zwischen der Leitschaufel und den Kanalsegmenten vorgesehen werden. Diese großen Spalte werden üblicherweise, insbesondere bei Turbinen, aufgrund von hohen Temperaturunterschieden und daraus resultierenden hohen Wärmedehnungen vorgesehen, um trotz dieser Wärmedehnungen eine Bewegbarkeit und somit Verstellbarkeit der Leitschaufel relativ zu dem Gehäuseelement und den Kanalsegmenten sicherzustellen. Diese üblicherweise vorgesehenen, großen Spalte beeinträchtigen jedoch einen effizienten Betrieb der Gasturbine, da die Spalte einen Wirkungsgradverlust zur Folge haben. Die vorliegende Erfindung ist jedoch nicht auf Turbinen bzw. Turbinenabschnitte von Gasturbinen beschränkt, sondern insbesondere auch bei Verdichtern bzw. Verdichterabschnitten von Gasturbinen vorteilhaft.

Bei einer erfindungsgemäßen Leiteinrichtung ist es in einer Ausführung nun jedoch möglich, eine relativ zu den Kanalsegmenten bewegliche Leitschaufel einzusetzen und somit die Gasturbine, insbesondere ein Flugtriebwerk, an unterschiedliche Betriebspunkte effizient anpassen zu können, und gleichzeitig, insbesondere besonders, geringe und/oder zumindest im Wesentlichen temperaturunabhängige Spalte der Leitschaufel relativ zum Kanal, das heißt zwischen der Leitschaufel und den Kanalsegmenten zu schaffen. Der Aufbau einer erfindungsgemäßen Leiteinrichtung ermöglicht es nämlich in einer Ausführung, die prinzipiell auftretenden Temperaturdehnungen durch Biegen der Leitschaufel in Umfangsrichtung zu kompensieren. Dadurch können unerwünschte Strömungen vermieden oder zumindest gering gehalten werden, so dass zumindest ein überwiegender Teil des den Kanal durchströmenden Gases effektiv und effizient mittels der Leitschaufel auf gewünschte Weise abgelenkt beziehungsweise umgelenkt werden kann. Zusätzlich oder alternativ kann in einer Ausführung ein, insbesondere besonders, guter Dichteffekt insbesondere in einem radial äußeren Bereich des Kanals erzielt werden, so dass unerwünschte, den Wirkungsgrad der Gasturbine beeinträchtigende Strömungen zumindest gering gehalten werden können. Wie vorstehend ausgeführt, ist die vorliegende Erfindung jedoch nicht auf Turbinen beschränkt, sondern insbesondere auch bei Verdichtern vorteilhaft.

Zusätzlich oder alternativ ermöglicht der Aufbau einer erfindungsgemäßen Leiteinrichtung in einer Ausführung eine, insbesondere besonders, einfache Montage, so dass die Leiteinrichtung und die Gasturbine insgesamt auf, insbesondere besonders, einfache, zeit- und/oder kostengünstige Weise hergestellt werden können. Dies ist insbesondere möglich, wenn die Buchse in die Durchgangsöffnung des Gehäuseelements in radialer Richtung von außen nach innen eingesteckt werden kann und somit montierbar ist. Ferner ist es vorzugsweise vorgesehen, dass die Buchse hinsichtlich ihrer Dimensionen, insbesondere hinsichtlich ihrer in radialer Richtung der Gasturbine verlaufenden Erstreckung und/oder hinsichtlich ihrer Wandstärke derart ausgestaltet ist, dass bei demontierter Buchse ein vorgegebener, die Montage der Kanalsegmente und der Leitschaufel ermöglichender Bewegungsbereich, in welchem die Leitschaufel und die Kanalsegmente bewegbar sind, freigegeben ist. Mit anderen Worten ist die Buchse beispielsweise derart ausgestaltet, dass durch deren Fehlen ein für die Montage der Leitschaufel und der Kanalsegmente ausreichender Freiraum zur Verfügung steht. Beispielsweise kann die Buchse nach einem Anordnen und Bewegen der Kanalsegmente und der Leitschaufel in eine vorgebbare, gewünschte Montageposition in radialer Richtung von außen nach innen in die Durchgangsöffnung eingesteckt werden, wodurch die Leitschaufel und beispielsweise über diese die Kanalsegmente in der vorgebbaren Montageposition mittels der Buchse am Gehäuseelement festgelegt werden. Beispielsweise ist es möglich, im Rahmen der Montage der Leitschaufel und der Kanalsegmente die Leitschaufel zumindest ein Stück aus der Durchgangsöffnung und somit aus dem Gehäuseelement in radialer Richtung nach außen zu ziehen. Dies geht mit einem Bewegen zumindest des äußeren ersten Kanalsegments in radialer Richtung nach außen einher, so dass sich beispielsweise eine besonders einfache Montage des inneren zweiten Kanalsegments im Gehäuseelement realisieren lässt.

Insbesondere zur Realisierung einer, insbesondere besonders, einfachen Montage ist es bei einer Ausführungsform vorgesehen, dass das erste Kanalsegment wenigstens eine Durchgangsöffnung aufweist, die ein Bereich, insbesondere ein Zapfen oder Teller, der Leitschaufel, insbesondere in radialer Richtung, durchgreift und/oder über welche das erste Kanalsegment axial und/oder in Umfangsrichtung relativ zum Gehäuseelement gelagert ist.

Bei einer weiteren Ausführungsform weist das erste Kanalsegment wenigstens zwei in axialer Richtung voneinander beabstandete Nuten auf, über welche das erste Kanalsegment relativ zum Gehäuseelement gelagert ist. Hierdurch kann in einer Ausführung das erste Kanalsegment auf, insbesondere besonders, einfache, zeit- und kostengünstige Weise am Gehäuseelement gehalten beziehungsweise montiert werden. Insbesondere ist eine Ausführung, die mit einer oder mehreren der vorstehend beschriebenen Ausführungen kombiniert sein kann, dadurch gekennzeichnet, dass das erste Kanalsegment über wenigstens zwei in axialer Richtung voneinander beabstandete Nuten relativ zum Gehäuseelement gelagert ist.

Eine weitere Ausführungsform, die mit einer oder mehreren der vorstehend beschriebenen Ausführungen kombiniert sein kann, zeichnet sich dadurch aus, dass die Buchse eine Wandstärke aufweist, welche größer ist als die in eine der Nuten hineinragende Länge zumindest einer der Laschen des ersten Kanalsegments. Somit kann in einer Ausführung die zumindest eine Lasche einfach in die korrespondierende Nut eingesteckt werden.

In vorteilhafter Ausgestaltung der Erfindung, die mit einer oder mehreren der vorstehend beschriebenen Ausführungen kombiniert sein kann, überragt die Buchse zumindest einen an die Buchse angrenzenden Wandungsbereich des Gehäuseelements in radialer Richtung nach innen. Hierdurch lässt sich eine, insbesondere besonders, stabile Lagerung der Leitschaufel über die Buchse an dem Gehäuseelement realisieren. Zusätzlich oder alternativ kann in einer Ausführung dadurch ein besonders großer Bewegungsbereich realisiert werden, welcher bei demontierter Buchse freigegeben ist und für die Montage der Leitschaufel und der Kanalsegmente zur Verfügung steht.

Insbesondere, um eine, insbesondere besonders, einfache Montage der Leiteinrichtung zu realisieren, ist es bei einer weiteren Ausführungsform der Erfindung, die mit einer oder mehreren der vorstehend beschriebenen Ausführungen kombiniert sein kann, vorgesehen, dass die Leitschaufel wenigstens ein zumindest teilweise in einer korrespondierenden Aufnahmeöffnung des zweiten Kanalsegments aufgenommenes Verbindungselement, insbesondere einen Zapfen, aufweist, über welches die Leitschaufel mit dem zweiten Kanalsegment verbunden ist, wobei die den an die Buchse angrenzenden Wandungsbereich überragende Länge der Buchse größer ist als die in die Aufnahmeöffnung hineinragende Länge des Verbindungselements.

Schließlich hat es sich insbesondere zur Realisierung einer, insbesondere besonders, einfachen Montage als vorteilhaft gezeigt, wenn in einer Ausführung, die mit einer oder mehreren der vorstehend beschriebenen Ausführungen kombiniert sein kann, radial zwischen dem ersten Kanalsegment und dem Gehäuseelement ein Freiraum vorgesehen ist, welcher zumindest in radialer Richtung größer ist als die in die Aufnahmeöffnung hineinragende Länge des Verbindungselements.

Eine weitere Ausführungsform, die mit einer oder mehreren der vorstehend beschriebenen Ausführungen kombiniert sein kann, zeichnet sich dadurch aus, dass die Leitschaufel über ein an der Leitschaufel vorgesehenes und zumindest teilweise in der Buchse und zumindest teilweise in der Durchgangsöffnung des Gehäuseelements aufgenommenes Lagerelement an der Buchse gelagert ist. Das Lagerelement ist beispielsweise als Stift oder Zapfen ausgebildet und/oder weist eine Außenkontur auf, welche zumindest im Wesentlichen der Form eines geraden Kreiszylinders entspricht. Hierdurch kann in einer Ausführung eine, insbesondere besonders, einfache Montage und/oder eine, insbesondere besonders, vorteilhafte Lagerung der Leitschaufel an der Buchse realisiert werden. Vorzugsweise ist es dabei vorgesehen, dass der Bewegungsbereich bei demontierter Buchse bei zumindest teilweise in der Durchgangsöffnung aufgenommenem Lagerelement freigegeben ist. Dies bedeutet, dass das Lagerelement bei demontierter Buchse zumindest teilweise in der Durchgangsöffnung aufgenommen ist, wobei der für die Montage ausreichende Freiraum, in welchem die Leitschaufel und die Kanalsegmente bewegt werden können, zur Verfügung steht.

In, insbesondere besonders, vorteilhafter Ausgestaltung der Erfindung, die mit einer oder mehreren der vorstehend beschriebenen Ausführungen kombiniert sein kann, ist an dem zweiten Kanalsegment auf einer in radialer Richtung nach innen weisenden Seite des zweiten Kanalsegments wenigstens ein Dichtungselement, insbesondere ein Dichtring, gehalten. Dem inneren zweiten Kanalsegment kommt somit in einer Ausführung eine Doppelfunktion zu. Einerseits dient das zweite Kanalsegment zum Begrenzen des Kanals. Andererseits dient das innere zweite Kanalsegment zum Halten des Dichtrings. Dadurch können zusätzliche und separate Befestigungselemente vermieden werden, so dass sich eine, insbesondere besonders, einfache Montage, eine geringe Teilanzahl und/oder ein geringes Gewicht der Leiteinrichtung realisieren lassen. Mittels des Dichtrings ist beispielsweise das zweite Kanalsegment gegen ein Rotorelement, insbesondere eine Laufscheibe, eines um eine bzw. die Drehachse relativ zu dem Gehäuseelement drehbaren Rotors der Gasturbine abdichtbar, wobei die Drehachse des Rotors in axialer Richtung der Gasturbine verläuft.

Zusätzlich oder alternativ kommt in einer Ausführung der Leitschaufel eine Doppelfunktion zu, da sie in einer Ausführung einerseits zum Ablenken des den Kanal durchströmenden Gases und andererseits zum Befestigen beziehungsweise Halten des inneren zweiten Kanalsegments dient. Zusätzliche beziehungsweise separate Halteelemente zum Halten und Befestigen des inneren zweiten Kanalsegments können somit vermieden werden, so dass sich eine besonders geringe Teileanzahl und eine besonders einfache, zeit- und kostengünstige Montage der Leiteinrichtung realisieren lässt.

Insbesondere zur Realisierung einer, insbesondere besonders, vorteilhaften Dichtwirkung ist es bei einer weiteren Ausführungsform der Erfindung, die mit einer oder mehreren der vorstehend beschriebenen Ausführungen kombiniert sein kann, vorgesehen, dass das Dichtungselement über eine Speichenzentrierung an einem zweiten Kanalsegment gehalten ist. Hierdurch lässt sich in einer Ausführung auch eine besonders präzise Positionierung des Dichtungselements realisieren, so dass eine, insbesondere besonders, gute Dichtwirkung geschaffen werden kann. Durch die Speichenzentrierung des Dichtungselements, insbesondere des Dichtrings, wird in einer Ausführung die Dichtwirkung des Dichtungselements zur Laufscheibe hin nicht beeinträchtigt. Dieses Konzept ermöglicht vorteilhaft die Darstellung eines, insbesondere besonders, hohen Wirkungsgrads der Gasturbine. Vorzugsweise ist der Dichtring als in Umfangsrichtung vollständig umlaufender, das heißt geschlossener Ring ausgebildet.

Als besonders vorteilhaft hat es sich gezeigt, wenn das Gehäuseelement zumindest in dessen Umfangsrichtung ungeteilt ausgebildet ist. Mit anderen Worten ist in einer Ausführung, die mit einer oder mehreren der vorstehend beschriebenen Ausführungen kombiniert sein kann, das Gehäuseelement zumindest in dessen Umfangsrichtung ungeteilt bzw. einstückig beziehungsweise einteilig ausgebildet. Hierdurch können in einer Ausführung die Teileanzahl und/oder der Montageaufwand der Gasturbine insgesamt, insbesondere besonders, gering gehalten werden. Gleichzeitig können die Leitschaufel und/oder die Kanalsegmente, insbesondere besonders, einfach in das als ungeteilte Gehäuse ausgebildete Gehäuseelement montiert werden. Das Gehäuseelement ist beispielsweise als in Umfangsrichtung geschlossenes Ringelement und somit in Umfangsrichtung einteilig ausgebildet.

Im Gegensatz dazu ist in einer Ausführung eine segmentierte Bauweise des Kanals vorgesehen. Dies bedeutet, dass beispielsweise eine Mehrzahl von in Umfangsrichtung aufeinanderfolgenden ersten Kanalsegmenten vorgesehen ist, wobei die ersten Kanalsegmente den Kanal in radialer Richtung nach außen jeweils teilweise begrenzen. Alternativ oder zusätzlich ist auch eine Mehrzahl von in Umfangsrichtung aufeinanderfolgend angeordneten zweiten Kanalsegmenten vorgesehen, durch welche der Kanal in radialer Richtung nach innen begrenzt ist. Durch diese segmentierte Bauweise können die Kanalsegmente, welche beispielsweise über Nuten und Dichtungselemente, insbesondere Dichtbleche, dichtend miteinander verbunden sind, insbesondere temperaturbedingte Bewegungen relativ zueinander ausführen und somit frei atmen, das heißt ihren Durchmesser innerhalb gewisser Grenzen verkleinern oder vergrößern. Hierdurch können insbesondere übermäßige Wärmedehnungen der Leitschaufel zum Kanal vermieden werden. Die Position der bewegbaren Leitschaufel wird dabei über die Buchse am Gehäuseelement festgelegt, so dass beispielsweise die temperaturbedingten Bewegungen der Kanalsegmente relativ zueinander die gewünschte Position der Buchse nicht übermäßig beeinträchtigt. Durch diese segmentierte Bauweise können insbesondere übermäßige thermische Spannungen zwischen den einzelnen Kanalsegmenten vermieden werden.

In einer anderen Ausführung ist das zweite Kanalsegment in Umfangsrichtung ungeteilt bzw. einstückig bzw. einteilig ausgebildet, insbesondere als in Umfangsrichtung geschlossener (Innen)Ring. Zusätzlich oder alternativ kann in einer Ausführung das an dem zweiten Kanalsegment gehaltene Dichtungselement, insbesondere der Dichtring, in Umfangsrichtung ungeteilt bzw. einstückig bzw. einteilig ausgebildet. Hierdurch kann in einer Ausführung jeweils das Gewicht reduziert, die Zentrierung verbessert und/oder die Schwingungsstabilität verbessert werden, was vorteilhaft größere Wirkungsgrade bewirken kann. Insbesondere bei einem in Umfangsrichtung ungeteilten zweiten Kanalsegment kann eine Dichtung gegen einen Rotor der Gasturbine auch fest an dem zweiten Kanalsegment angeordnet, insbesondere stoffschlüssig mit diesem verbunden oder integral mit diesem ausgebildet sein.
Eine weitere Ausführungsform, die mit einer oder mehreren der vorstehend beschriebenen Ausführungen kombiniert sein kann, zeichnet sich dadurch aus, dass das Gehäuseelement, die Leitschaufel und die Kanalsegmente als separat voneinander ausgebildete und zumindest mittelbar miteinander verbundene Bauteile ausgebildet sind. Hierdurch können in einer Ausführung übermäßige thermische Spannungen zwischen der Leitschaufel, dem Gehäuseelement und den Kanalsegmenten vermieden werden, da sich die Bauteile relativ zueinander bewegen können.
Ein weiterer Aspekt der Erfindung betrifft eine Gasturbine, insbesondere ein Flugtriebwerk, mit wenigstens einer hier beschriebenen Leiteinrichtung. Vorteilhafte Ausgestaltungen der erfindungsgemäßen Leiteinrichtung sind als vorteilhafte Ausgestaltungen der erfindungsgemäßen Gasturbine anzusehen und umgekehrt.

Gemäß der Erfindung ist bzw. wird das erste Kanalsegment, lösbar, mit dem Gehäuseelement durch wenigstens ein erstes Haltesegment verbunden. Hierdurch kann insbesondere die Montage und/oder Demontage erleichtert werden.
In einer Ausführung weist die mehrstufige Leiteinrichtung wenigstens ein weiteres erstes Kanalsegment, das von dem (einen) ersten Kanalsegment in Axialrichtung der Gasturbine beabstandet ist, und wenigstens eine weitere Leitschaufel auf, welche relativ zu diesem weiteren ersten Kanalsegment um eine von der (einen) Drehachse in Axialrichtung der Gasturbine beabstandete weitere Drehachse drehbar ist. Wie vorstehend erläutert, durchgreift in einer Ausführung ein Bereich, insbesondere ein Zapfen oder Teller, dieser weiteren Leitschaufel eine Durchgangsöffnung dieses weiteren ersten Kanalsegments, insbesondere in radialer Richtung. In einer Ausführung ist in Axialrichtung der Gasturbine zwischen der (einen) Leitschaufel und der weiteren Leitschaufel ein Laufgitter der Gasturbine vorgesehen bzw. angeordnet.

In einer Ausführung ist bzw. wird das weitere erste Kanalsegment durch das erste Haltesegment, insbesondere lösbar, mit dem Gehäuseelement verbunden. Somit kann dieses erste Haltesegment in einer Ausführung vorteilhaft eine Doppelfunktion zur Verbindung zweier in Axialrichtung der Gasturbine beabstandeter erster Kanalsegmente erfüllen.

Zusätzlich oder alternativ ist bzw. wird das weitere erste Kanalsegment in einer Ausführung durch wenigstens ein zweites Haltesegment, insbesondere lösbar, mit dem Gehäuseelement verbunden, insbesondere anschließend an ein Verbinden durch das erste Haltesegment und/oder in gleicher Weise wie zuvor das (eine) erste Kanalsegment durch das erste Haltesegment.

Die Leiteinrichtung kann in einer Ausführung noch wenigstens ein anderes weiteres erstes Kanalsegment, das von dem weiteren ersten Kanalsegment in Axialrichtung der Gasturbine beabstandet ist, und wenigstens eine andere weitere Leitschaufel aufweisen, welche relativ zu diesem anderen weiteren ersten Kanalsegment um eine von der weiteren Drehachse in Axialrichtung der Gasturbine beabstandete andere weitere Drehachse drehbar ist. Wie vorstehend erläutert, durchgreift in einer Ausführung ein Bereich, insbesondere ein Zapfen oder Teller, dieser anderen weiteren Leitschaufel eine Durchgangsöffnung dieses anderen weiteren ersten Kanalsegments, insbesondere in radialer Richtung. In einer Ausführung ist in Axialrichtung der Gasturbine zwischen der weiteren Leitschaufel und der anderen weiteren Leitschaufel ein weiteres Laufgitter der Gasturbine vorgesehen bzw. angeordnet.

In einer Ausführung ist bzw. wird das andere weitere erste Kanalsegment durch das zweite Haltesegment, insbesondere lösbar, mit dem Gehäuseelement verbunden. Somit kann dieses zweite Haltesegment in einer Ausführung ebenfalls vorteilhaft eine Doppelfunktion zur Verbindung zweier in Axialrichtung der Gasturbine beabstandeter erster Kanalsegmente erfüllen bzw. seinerseits als erstes Haltesegment in Bezug auf das weitere und das andere weitere erste Kanalsegment fungieren. Entsprechend ist bzw. wird das andere weitere erste Kanalsegment in einer Ausführung durch wenigstens ein weiteres zweites Haltesegment, insbesondere lösbar, mit dem Gehäuseelement verbunden, insbesondere anschließend an ein Verbinden durch das (eine) zweite Haltesegment und/oder in gleicher Weise wie zuvor das weitere erste Kanalsegment durch das (eine) zweite Haltesegment.

Somit können in einer Ausführung vorteilhaft zwei oder mehr in Axialrichtung der Gasturbine beabstandete erste Kanalsegmente, insbesondere nacheinander, mit dem Gehäuseelement verbunden bzw. gestapelt werden bzw. sein. Hierdurch kann in einer Ausführung insbesondere die Montage und/oder Demontage verbessert werden.

Zusätzlich oder alternativ zu einem zweiten Haltesegment, welches zwei in Axialrichtung der Gasturbine beabstandete erste Kanalsegmente mit dem Gehäuseelement verbindet, kann in einer Ausführung ein erstes Kanalsegment, welches in Axialrichtung der Gasturbine einer Austrittsöffnung des Gehäuseelements am nächsten liegt, durch wenigstens ein Haltesegment insbesondere lösbar, mit dem Gehäuseelement verbunden sein bzw. werden.

Dieses Haltesegment ist in einer Ausführung in Umfangsrichtung des Gehäuseelements und/oder Haltesegments ungeteilt bzw. als Abschluss-Ring ausgebildet. Hierdurch kann in einer Ausführung vorteilhaft der Anschluss eines Teilmoduls der Gasturbine an die Leiteinrichtung verbessert werden.

Das Haltesegment, durch das das der Austrittsöffnung nächste erste Kanalsegment mit dem Gehäuseelement verbunden ist, kann das vorstehend genannte erste oder (weitere) zweite Haltesegment sein. Gleichermaßen kann es auch ein hiervon verschiedenes drittes Haltesegment sein.

In einer Ausführung ist das Haltesegment, durch das ein erstes Kanalsegment, insbesondere das (eine) erste Kanalsegment, das weitere erste Kanalsegment und/oder das andere weitere erste Kanalsegment, mit dem Gehäuseelement verbunden ist, (jeweils) auf einer einer bzw. der Austrittsöffnung des Gehäuseelements zugewandten Seite dieses ersten Kanalsegments bzw. in Durchströmungsrichtung der Gasturbine stromabwärts des Kanalsegments angeordnet. Hierdurch kann in einer Ausführung vorteilhaft die Montage und/oder Stabilität verbessert werden.

In einer Ausführung ist bzw. wird das Haltesegment, durch das ein erstes Kanalsegment, insbesondere das (eine) erste Kanalsegment, das weitere erste Kanalsegment und/oder das andere weitere erste Kanalsegment, mit dem Gehäuseelement verbunden ist, (jeweils) lösbar, insbesondere reibschlüssig, mit dem Gehäuseelement verbunden. Erfindungsgemäß ist bzw. wird das Haltesegment radial bzw. in radialer Richtung und/oder von außen bzw. einer Außenseite des Gehäuseselements, mit dem Gehäuseelement verschraubt. Hierdurch kann in einer Ausführung vorteilhaft die Montage und/oder Stabilität verbessert werden.

In einer Ausführung ist bzw. wird das Haltesegment, durch das ein erstes Kanalsegment, insbesondere das (eine) erste Kanalsegment, das weitere erste Kanalsegment und/oder das andere weitere erste Kanalsegment, mit dem Gehäuseelement verbunden ist, (jeweils) lösbar, insbesondere formschlüssig, mit diesem ersten Kanalsegment verbunden. In einer Weiterbildung greift eine Lasche dieses Haltesegments in eine Nut in diesem ersten Kanalsegment, insbesondere in Axialrichtung der Gasturbine, ein oder eine Lasche dieses ersten Kanalsegments greift in eine Nut in diesem Haltesegment, insbesondere in Axialrichtung der Gasturbine, ein. Hierdurch kann in einer Ausführung vorteilhaft die Montage und/oder Stabilität verbessert werden.

In einer Ausführung ist bzw. wird eine, insbesondere geteilte, Dichtscheibe, (jeweils) in einem Spalt zwischen einer Durchgangsöffnung eines ersten Kanalsegments, insbesondere des (einen) ersten Kanalsegments, des weiteren ersten Kanalsegments und/oder des anderen weiteren ersten Kanalsegments, und einem diese Durchgangsöffnung durchgreifenden Bereich der entsprechenden Leitschaufel angeordnet. Hierdurch kann in einer Ausführung der Wirkungsgrad erhöht werden. Insbesondere kann hierdurch in einer Ausführung ein Spiel zwischen erstem Kanalsegment und Leitschaufel in Längsrichtung der Durchgangsöffnung bei gleichzeitiger Reduzierung einer Leckage realisiert werden.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigen:
- Fig. 1: ausschnittsweise eine schematische Längsschnittansicht einer Leiteinrichtung für eine Gasturbine, mit wenigstens einem Gehäuseelement, mit wenigstens einem ersten Kanalsegment, mit wenigstens einem zweiten Kanalsegment und mit wenigstens einer Leitschaufel, welche über eine Buchse an dem Gehäuseelement gelagert ist, wobei das zweite Kanalsegment an der Leitschaufel befestigt und über diese am Gehäuseelement gehalten ist;
- Fig. 2: eine schematische Perspektivansicht der Leiteinrichtung;
- Fig. 3: eine weitere schematische Perspektivansicht der Leiteinrichtung;
- Fig. 4: ausschnittsweise eine schematische Längsschnittansicht einer Leiteinrichtung nach einer weiteren Ausführung der vorliegenden Erfindung;
- Fig. 5-9: Montageschritte der Leiteinrichtung; und
- Fig. 10: eine Ausschnittsvergrößerung der Leiteinrichtung im Bereich einer Durchgangsöffnung in einem ersten Kanalsegment.

In den Figuren sind gleiche oder funktionsgleiche Elemente mit gleichen Bezugszeichen versehen.

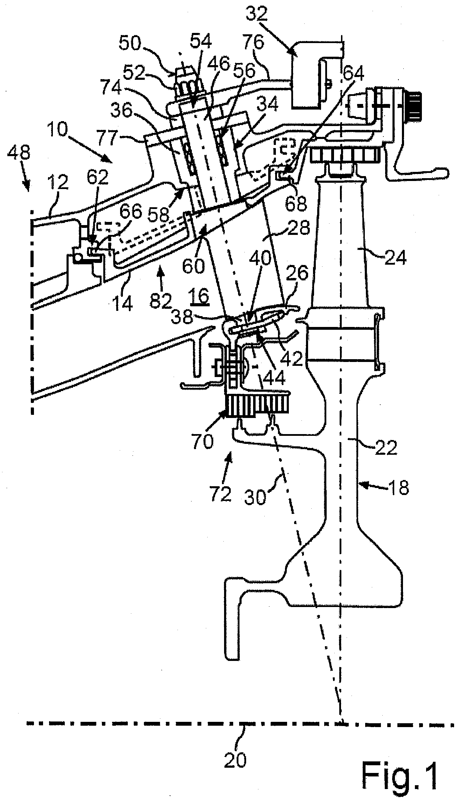

Fig. 1 zeigt eine im Ganzen mit 10 bezeichnete Leiteinrichtung für eine Gasturbine. Die Leiteinrichtung 10 umfasst wenigstens ein Gehäuseelement 12, welches beispielsweise in Umfangsrichtung der Gasturbine und somit des Gehäuseelements 12 einteilig, das heißt einstückig ausgebildet ist. Hierbei ist das Gehäuseelement 12 beispielsweise als in Umfangsrichtung vollständig umlaufender, das heißt geschlossener Ring ausgebildet. Die Leiteinrichtung 10 umfasst darüber hinaus eine Mehrzahl von in radialer Richtung des Gehäuseelements 12 beziehungsweise der Gasturbine innenseitige des Gehäuseelements 12 angeordnete, erste Kanalsegmente, von denen in Fig. 1 ein mit 14 bezeichnetes Kanalsegment erkennbar ist. Die mehreren ersten Kanalsegmente sind in Umfangsrichtung aufeinanderfolgend angeordnet. Die folgenden Ausführungen zum ersten Kanalsegment 14 können ohne weiteres auch auf die anderen ersten Kanalsegmente übertragen werden.

Aus Fig. 1 ist erkennbar, dass das äußere erste Kanalsegment 14 zumindest teilweise und zumindest überwiegend in radialer Richtung nach innen hin von dem Gehäuseelement 12 beabstandet ist. Darüber hinaus ist durch das äußere erste Kanalsegment 14 zumindest ein von einem Gas durchströmbarer Kanal 16 in radialer Richtung nach außen wenigstens teilweise begrenzt. Das Gas weist eine hohe Temperatur auf und ist somit ein Heißgas und wird über den Kanal 16 zu wenigstens einem Rotor 18 der Gasturbine geführt. Der Rotor 18 ist um eine Drehachse 20 relativ zum Gehäuseelement 12 drehbar und umfasst eine Laufscheibe 22 und eine Mehrzahl von Laufradschaufeln, von denen in Fig. 1 eine mit 24 bezeichnete Laufradschaufel erkennbar ist. Die Drehachse 20 erstreckt sich dabei in axialer Richtung der Gasturbine und somit des Gehäuseelements 12.

Darüber hinaus umfasst die Leiteinrichtung 10 wenigstens ein in radialer Richtung innenseitig des ersten Kanalsegments 14 angeordnetes, zweites Kanalsegment 26. Das innere zweite Kanalsegment 26 kann als in Umfangsrichtung vollständig umlaufender, das heißt geschlossener Ring ausgebildet sein. Alternativ dazu ist eine Mehrzahl von inneren zweiten Kanalsegmenten vorgesehen, welche in Umfangsrichtung aufeinanderfolgend angeordnet sind. Hierbei ist das Kanalsegment 26 eines der mehreren zweiten Kanalsegmente. Somit können die folgenden Ausführungen zum zweiten Kanalsegment 26 ohne weiteres auch auf die anderen, gegebenenfalls vorgesehenen zweiten Kanalsegmente übertragen werden.

Der Kanal 16 ist in radialer Richtung nach innen zumindest teilweise durch das zweite Kanalsegment 26 begrenzt. Dies bedeutet, dass eine segmentierte Bauweise des Kanals 16 vorgesehen ist, da dieser in radialer Richtung nach außen hin durch die mehreren ersten Kanalsegmente und in radialer Richtung nach innen durch die zweiten Kanalsegmente begrenzt wird. Die Leiteinrichtung 10 umfasst darüber hinaus eine Mehrzahl von Leitschaufeln, welche in Umfangsrichtung aufeinanderfolgend angeordnet sind. Von diesen mehreren Leitschaufeln ist in Fig. 1 eine mit 28 bezeichnete Leitschaufel erkennbar. Die folgenden Ausführungen zur Leitschaufel 28 können ohne weiteres auch auf die anderen Leitschaufeln übertragen werden. Die Leitschaufel 28 ist zumindest teilweise in dem Kanal 16 angeordnet und relativ zu dem Gehäuseelement 12 sowie relativ zu den Kanalsegmenten 14, 26 um eine Drehachse 30 drehbar. Aus Fig. 1 ist erkennbar, dass die Drehachse 30 schräg zur Drehachse 20 des Rotors 18 verläuft.

Durch die mehreren Leitschaufeln ist ein variables Turbinenleitgitter geschaffen, mittels welchem das den Kanal 16 durchströmende Gas bedarfsgerecht abgelenkt werden kann. Das Turbinenleitgitter, das heißt die Leitschaufel 28 ist in Strömungsrichtung des Gases durch den Kanal stromauf der Laufradschaufel 24 angeordnet, so dass das den Kanal 16 durchströmende Gas stromauf der Laufradschaufel 24 mittels der Leitschaufel 28 abgelenkt beziehungsweise umgelenkt werden kann. Dadurch kann das mittels der Leitschaufel 28 abgelenkte Gas die Laufradschaufel 24 in einem Strömungswinkel anströmen, mittels welchem ein besonders effizienter und wirkungsgradgünstiger Betrieb der Gasturbine realisierbar ist. Durch Drehen der Leitschaufel 28 um die Drehachse 30 kann der Anströmwinkel variiert werden, so dass dadurch das Turbinenleitgitter und somit die Gasturbine insgesamt bedarfsgerecht an unterschiedliche Betriebspunkte angepasst werden kann.

Hierzu ist die Leitschaufel 28 über eine Koppeleinrichtung 32 mit wenigstens einem Aktor gekoppelt, mittels welchem die Leitschaufel 28 über die Koppeleinrichtung 32 um die Drehachse 30 relativ zu dem Gehäuseelement 12 gedreht werden kann. Dadurch kann die Leitschaufel 28 beispielsweise zwischen zumindest zwei voneinander unterschiedlichen Stellungen verstellt werden. Der Kanal 16 ist beispielsweise als Ringkanal oder Ringraum ausgebildet, so dass die Kanalsegmente 14, 26 auch als Ringraumsegmente bezeichnet werden. Dabei sind die einzelnen Ringraumsegmente, das heißt beispielsweise die mehreren ersten Kanalsegmente und/oder die mehreren zweiten Kanalsegmente über Nuten und Dichtungselemente, insbesondere in Form von Dichtblechen, dichtend miteinander verbunden. Durch die Segmentierung des Kanals 16 können Wärmedehnungen an den jeweiligen Leitschaufeln zum Ringraum vermieden oder zumindest gering gehalten werden.

Um nun eine besonders einfache Montage der Leiteinrichtung 10 und der Gasturbine insgesamt sowie einen besonders effizienten Betrieb der Gasturbine zu realisieren, ist das zweite Kanalsegment 26 an der Leitschaufel 28 befestigt und an dem Gehäuseelement 12 über die Leitschaufel 28 gehalten. Dabei ist die Leitschaufel an dem Gehäuseelement 12 über eine in radialer Richtung von außen nach innen in eine Durchgangsöffnung 34 des Gehäuseelements 12 eingesteckte Buchse 36 gelagert.

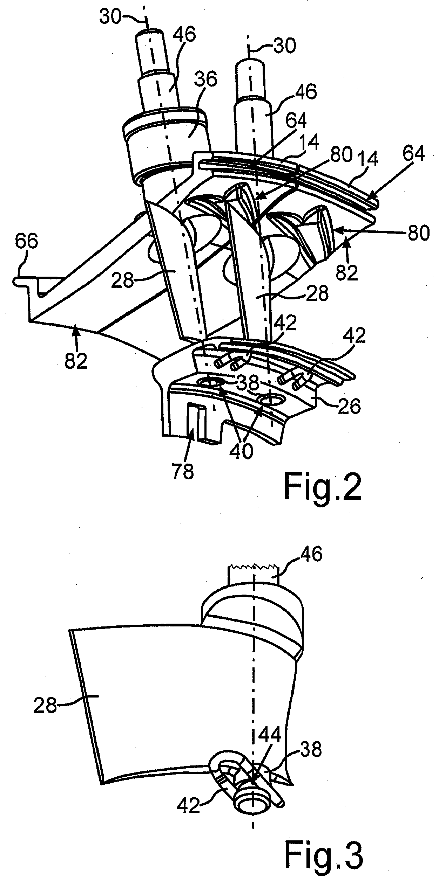

Aus Fig. 1 ist erkennbar, dass die Leitschaufel 28 ein Verbindungselement in Form eines Zapfens 38 aufweist, welcher zumindest teilweise in einer korrespondierenden und vorliegend als Durchgangsöffnung ausgebildeten Aufnahmeöffnung 40 des zweiten Kanalsegments 26 aufgenommen ist. Über den Zapfen 38 ist die Leitschaufel 28 über wenigstens ein Befestigungselement in Form eines Stiftes 42 mit dem zweiten Kanalsegment 26 verbunden, wobei der Stift 42 vorliegend U-förmig ausgebildet ist. Dies bedeutet, dass das zweite Kanalsegment 26 mittels des U-förmigen Stifts 42 an der Leitschaufel 28 über deren Zapfen 38 befestigt ist. Wie in Zusammenschau mit Fig. 2 und 3 erkennbar ist, ist der Stift 42 in korrespondierende und in Umfangsrichtung des Gehäuseelements 12 voneinander beabstandete Aufnahmeöffnungen des zweiten Kanalsegments 26 eingesteckt und greift in eine vollständig umlaufende Nut 44 des Zapfens 38 ein. Hierdurch wirkt der Stift 42 formschlüssig sowohl mit dem zweiten Kanalsegment 26 als auch mit der Leitschaufel 28 zusammen, so dass das zweite Kanalsegment 26 zumindest formschlüssig und zumindest radial über den Stift 42 an der Leitschaufel 28 gehalten ist.

Die Leitschaufel 28 weist ferner ein Lagerelement in Form eines Zapfens 46 auf. Der Zapfen 46 ist ein Stabelement und weist eine Außenkontur auf, welche eine Form hat, die zumindest im Wesentlichen einer Form eines geraden Kreiszylinders entspricht. Der Zapfen 46 ist zumindest teilweise in der Buchse 36 aufgenommen. Ferner ist der Zapfen 46 zumindest teilweise in der Durchgangsöffnung 34 des Gehäuseelements 12 aufgenommen. Aus Fig. 1 ist erkennbar, dass der Zapfen 46 sowohl die Buchse 36 als auch die Durchgangsöffnung 34 durchdringt und somit auf einer Außenseite 48 des Gehäuseelements 12 dieses in radialer Richtung nach außen überragt.

In einem außenseitig des Gehäuseelements 12, das heißt auf der Außenseite 48 angeordneten Teilbereich weist der Zapfen 46 ein Außengewinde 50 auf, auf welches eine Mutter 52 aufgeschraubt ist. Mittels der Mutter 52 ist die Leitschaufel 28 in Radialer Richtung gesichert und mit der Koppeleinrichtung 32 verbunden. In einem weiteren Teilbereich 54 weist der Zapfen 46 eine unrunde Außenkontur, beispielsweise eine vieleckige, insbesondere viereckige, Außenkontur auf, über welche der Zapfen 46 drehfest mit der Koppeleinrichtung 32 verbunden ist. Dadurch können Drehmomente zwischen dem Zapfen 46 und der Koppeleinrichtung 32 übertragen werden, so dass dadurch die Leitschaufel 28 gedreht werden kann. Darüber hinaus ist ein Dichtungselement in Form einer Stopfdichtung 56 vorgesehen, welche in radialer Richtung der Buchse 36 zwischen dieser und dem Zapfen 46 angeordnet ist.

Die Buchse 36 überragt zumindest einen an die Buchse angrenzenden Wandungsbereich 58 des Gehäuseelements 12 in radialer Richtung nach innen hin. Dabei ist es vorzugsweise vorgesehen, dass die in radialer Richtung von außen montierbare Buchse 36 das Gehäuseelement 12 in radialer Richtung nach innen hin soweit überragt und eine solch große Wandstärke aufweist, dass bei demontierter Buchse 36 genügend Freiraum für die Montage der Kanalsegmente 14, 26 und der Leitschaufel 28 zur Verfügung steht. In Fig. 1 ist durch gestrichelte Linien eine Montageposition des ersten Kanalsegments 14 veranschaulicht, die das erste Kanalsegment 14 bei demontierter Buchse 36 einnehmen kann. Dies bedeutet, dass das erste Kanalsegment 14 in die Montageposition bewegt wird, wenn die Leitschaufel 28 montiert wird.

Das erste Kanalsegment 14 weist eine Durchgangsöffnung 60 auf, welche von der Leitschaufel 28 durchdrungen ist. Hierdurch kann das Kanalsegment 14 in axialer Richtung und in Umfangsrichtung relativ zum Gehäuseelement 12 über die Leitschaufel 28 und die Buchse 36 festgelegt werden. Darüber hinaus ist das erste Kanalsegment 14 über wenigstens eine vordere Nut 62 und über wenigstens eine hintere Nut 64 am Gehäuseelement 12 radial festgelegt. Die vordere Nut 62 ist dabei am Gehäuseelement 12 vorgesehen, wobei eine Lasche 66 des ersten Kanalsegments 14 zumindest teilweise in die vordere Nut 62 eingreift. Die hintere Nut 64 ist am ersten Kanalsegment 14 vorgesehen, wobei eine am Gehäuseelement 12 vorgesehene Lasche 68 in die hintere Nut 64 eingreift.

Darüber hinaus umfasst die Leiteinrichtung 10 ein Dichtungselement in Form eines Dichtrings 70, welcher an dem zweiten Kanalsegment 26 auf einer in radialer Richtung nach innen weisenden Seite 72 des zweiten Kanalsegments 26 befestigt ist. Dies bedeutet, dass der beispielsweise in Umfangsrichtung des Gehäuseelements 12 vollständig umlaufende, das heißt geschlossene Dichtring 70 an den jeweiligen zweiten Kanalsegmenten befestigt ist, so dass keine zusätzlichen Befestigungselemente zum Halten und Befestigen des Dichtrings 70 vorgesehen und erforderlich sind. Mittels des Dichtrings 70 ist das zweite Kanalsegment 26 gegen die Laufscheibe 22 abgedichtet.

Insgesamt ist erkennbar, dass das Gehäuseelement 12, die Leitschaufel 28 und die Kanalsegmente 14, 26 als separat voneinander hergestellte und zumindest mittelbar miteinander verbundene Bauteile ausgebildete sind, wobei die Leitschaufel 28 und die Kanalsegmente 14, 26 zusammen mit dem Dichtring 70 einen Bauteilverbund bilden, welcher über die Leitschaufel 28 und die Buchse 36 am Gehäuseelement 12 gehalten und an diesem aufgehängt ist. Darüber hinaus ist in Fig. 1 eine Abstimmscheibe 74 vorgesehen, welche zwischen einem Hebelarm 76 der Koppeleinrichtung 32 und einem Deckel 77 angeordnet ist.

Zur Realisierung einer vorteilhaften Halterung und Zentrierung des Dichtrings 70 ist vorgesehen, dass der Dichtring 70 über eine Speichenzentrierung an dem zweiten Kanalsegment 26 gehalten ist. In Fig. 2 ist dabei eine an dem zweiten Kanalsegment 26 vorgesehene Nut 78 für die Speichenzentrierung des Dichtrings 70 erkennbar. Ferner sind in Fig. 2 zwei der ersten Kanalsegmente erkennbar, welche in Umfangsrichtung des Gehäuseelements 12 aufeinanderfolgend angeordnet sind. Am jeweiligen ersten Kanalsegment 14 ist eine Ringraum-Konturierung 80 vorgesehen, welche auf einer in radialer Richtung nach innen weisenden und den Kanal 16 begrenzenden Seite 82 des jeweiligen ersten Kanalsegments 14 angeordnet ist. Mittels der Ringraum-Konturierung 80 kann ein Spalt zwischen der Leitschaufel 28 und dem jeweiligen ersten Kanalsegment 14 in unterschiedlichen Stellungen der Leitschaufel 28 zumindest im Wesentlichen konstant gehalten werden.

Vorzugsweise ist zwischen der Leitschaufel 28 und dem ersten Kanalsegment 14 und/oder zwischen der Leitschaufel 28 und dem zweiten Kanalsegment 26 eine enge und insbesondere dichtende Passung vorgesehen, die zwar eine Drehung der Leitschaufel 28 relativ zu den Kanalsegmenten 14, 26 erlaubt, ansonsten aber das jeweilige Kanalsegment 14 und/oder 26 in axialer Richtung und in Umfangsrichtung festlegt.

Das als Ringraumsegment ausgebildete Kanalsegment 14 ist verdrehsicher am Gehäuseelement 12 gehalten, wobei es zudem in radialer Richtung am Gehäuseelement 12 festgelegt ist und somit zusammen mit dem Gehäuseelement 12 bei thermischen Ausdehnung atmen, das heißt sich bewegen kann. Gegenüber einer einstückigen Ausbildung des Gehäuseelements 12 mit den Kanalsegmenten 14, 26 hat die Ausgestaltung des Gehäuseelements 12 und der Kanalsegmente 14, 26 als voneinander separat ausgebildete Bauteile den Vorteil, dass übermäßige thermische Spannungen vermieden werden können.

Das erste Kanalsegment 14 wird dabei vorzugsweise, so wie bei der in den Figuren gezeigten Ausführungsform, in axialer Richtung und in Umfangsrichtung im Wesentlichen über die Leitschaufel 28 und die Buchse 36 relativ zu dem Gehäuseelement 12 lagefixiert, wohingegen eine örtliche Festlegung des ersten Kanalsegments 14 in radialer Richtung relativ zu dem Gehäuseelement 12 im Wesentlichen durch die beiden Nuten 62, 64 erfolgt. Durch diese Art der Befestigung des ersten Kanalsegments 14 an dem Gehäuseelement 12 und durch die speichenzentrierte Aufhängung des Dichtrings 70 an dem zweiten Kanalsegment 26 wird ein im Wesentlichen spannungsfreier und spaltarmer Betrieb der Leiteinrichtung 10 ermöglicht. Auf diese Weise können sich die Bauteilabschnitte der Leiteinrichtung 10, die in den unmittelbaren Kontakten mit dem Heißgas im Kanal 16 gelangen beziehungsweise stehen, nämlich die Leitschaufel 28, das erste Kanalsegment 14 und das zweite Kanalsegment 26, ausdehnen, ohne Spannungen in das Gehäuseelement 12 und/oder den Dichtring 70 einzubringen.

Wie zuvor bereits beschrieben, bilden das erste Kanalsegment 14 und das zweite Kanalsegment 26 dabei vorzugsweise keinen geschlossenen Ring in Umfangsrichtung, sondern lediglich Kreisringsegmente. Dies ermöglicht es den Segmenten zusammen mit dem Gehäuseelement 12 bei thermischen Ausdehnungen zu atmen. In Umfangsrichtung können dabei zwischen zueinander benachbarten ersten Kanalsegmenten 14 und/oder zwischen zueinander benachbarten zweiten Kanalsegmenten 26 in den Figuren nicht dargestellte Dichtbleche vorgesehen sein, die eine Dichtigkeit des Kanals 16 in radialer Richtung beim Atmen sicherstellen.

Zudem sei angemerkt, dass - wie in Fig. 2 dargestellt - jeweils einem ersten Kanalsegment 14 jeweils eine oder mehrere Leitschaufeln 28 zugeordnet sein können, und einem zweiten Kanalsegment 26 mehrere - in dem dargestellten Ausführungsbeispiel zwei - Leitschaufeln zugeordnet sein können.

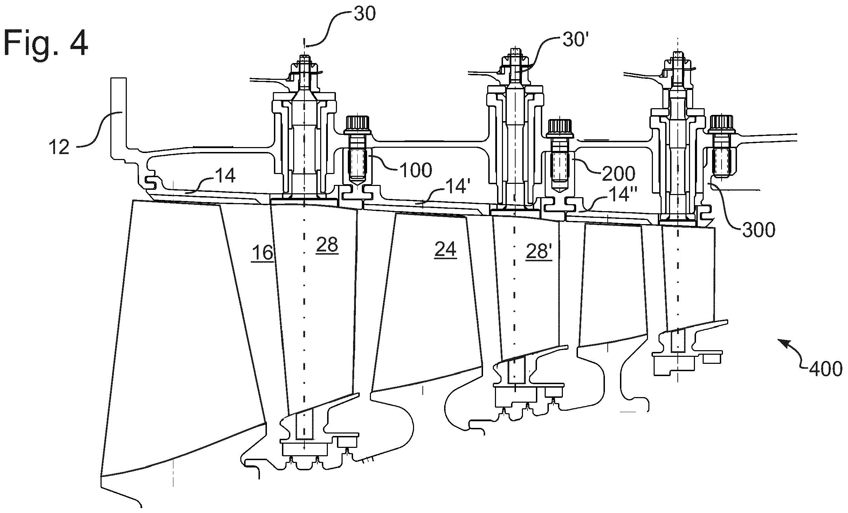

Fig. 4 zeigt eine Leiteinrichtung nach einer weiteren Ausführung der vorliegenden Erfindung, zu deren Beschreibung auf die vorstehenden Erläuterungen Bezug genommen und nachfolgend auf Unterschiede eingegangen wird.

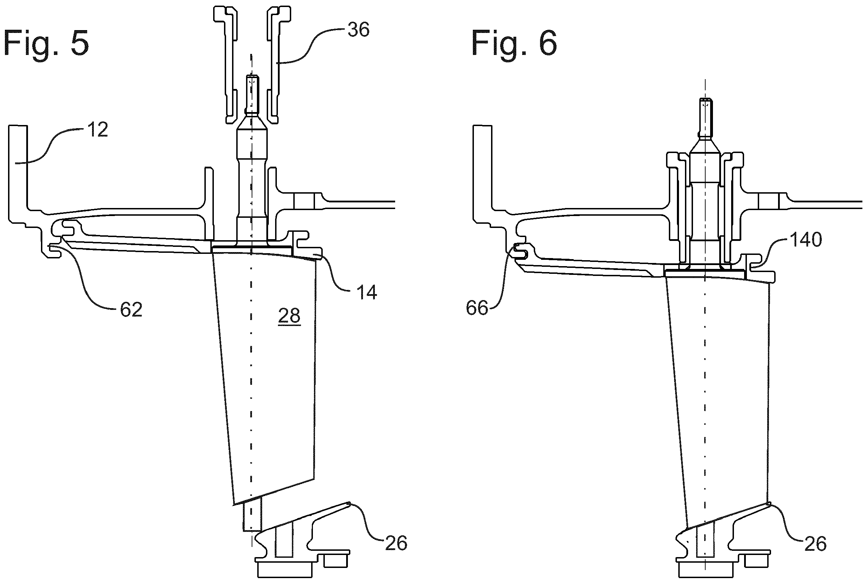

Zur Montage der Leiteinrichtung der Fig. 4 werden zunächst, wie in Fig. 5 gezeigt, mehrere in Umfangsrichtung verteilte erste Kanalsegmente 14, von denen in der Längsschnittansicht der Fig. 5 eines geschnitten ist, in Axialrichtung der Gasturbine (horizontal in Fig. 5) in das Gehäuseelement 12 eingeführt (von rechts nach links in Fig. 5), Leitschaufeln 28 radial (vertikal in Fig. 5) eingefädelt (von unten nach oben in Fig. 5), ein in Umfangsrichtung ungeteiltes zweites Kanalsegment 26 in Axialrichtung der Gasturbine in das Gehäuseelement 12 eingeführt (von rechts nach links in Fig. 5), die Leitschaufeln 28 mit den ersten Kanalsegmenten 14 in das zweite Kanalsegment 26 eingesteckt (von oben nach unten in Fig. 5), und Buchsen 36 in das Gehäuseelement 12 eingesteckt (von oben nach unten in Fig. 5), so dass sich der in Fig. 6 gezeigte Montagezustand ergibt.

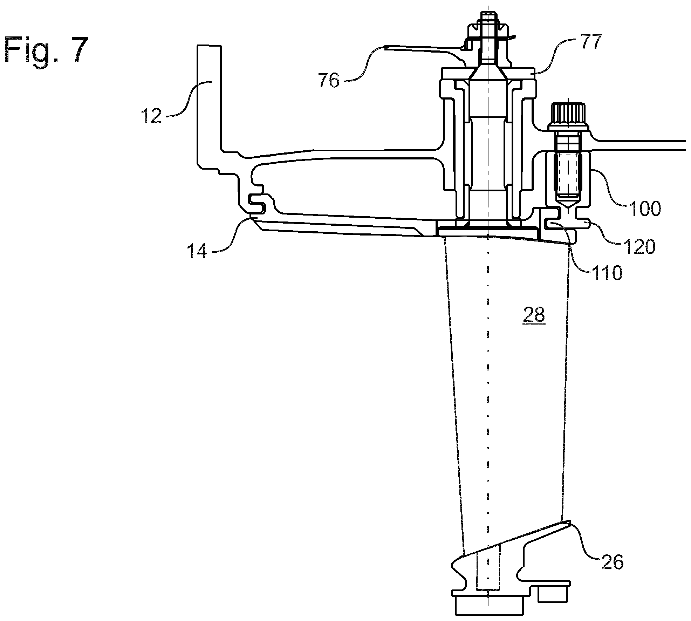

Dann werden mehrere in Umfangsrichtung verteilte erste Haltesegmente 100, von denen in der Längsschnittansicht der Fig. 7 eines geschnitten ist, in Axialrichtung der Gasturbine in das Gehäuseelement 12 eingeführt (von rechts nach links in Fig. 5). Dabei greift jeweils eine Lasche 110 der ersten Haltesegmente 100 in eine Nut 140 (vgl. Fig. 6) in dem ersten Kanalsegment 14.

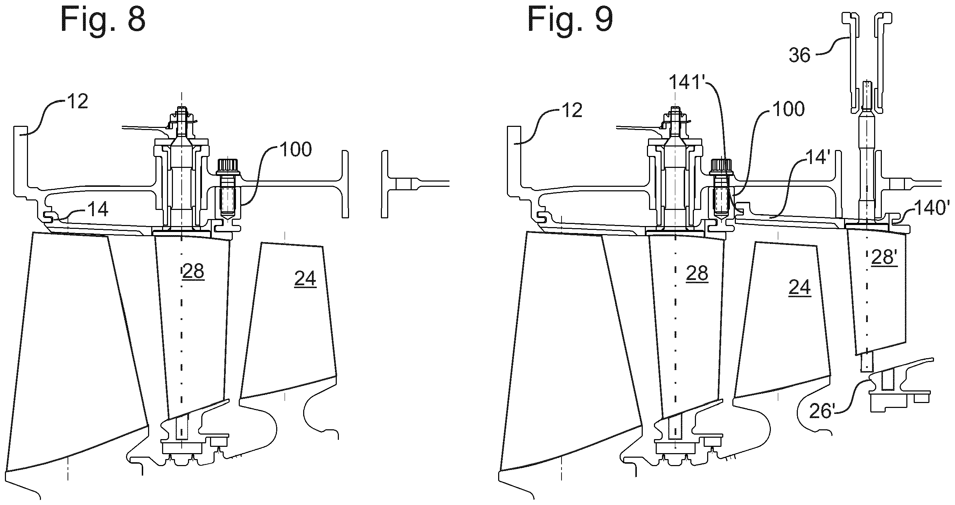

Anschließend werden die ersten Haltesegmente 100 radial von außen mit dem Gehäuseelement 12 verschraubt und Deckel 77 und Hebelelement 76 montiert, so dass sich der in Fig. 7 gezeigte Montagezustand ergibt.
Nach der Montage eines in Durchströmungsrichtung (von links nach rechts in Fig. 8) nachfolgenden bzw. stromabwärtigen Laufgitters mit Laufradschaufeln 24 (vgl. Fig. 8) werden in der gleichen, vorstehend beschriebenen Weise zunächst, wie in Fig. 9 gezeigt, mehrere in Umfangsrichtung verteilte weitere erste Kanalsegmente 14' in Axialrichtung der Gasturbine in das Gehäuseelement 12 eingeführt (von rechts nach links in Fig. 9), weitere Leitschaufeln 28', um weitere Drehachsen 30' drehbar, radial eingefädelt (von unten nach oben in Fig. 9), ein in Umfangsrichtung ungeteiltes weiteres zweites Kanalsegment 26' in Axialrichtung der Gasturbine in das Gehäuseelement 12 eingeführt (von rechts nach links in Fig. 9) und die weiteren Leitschaufeln 28' mit den weiteren ersten Kanalsegmenten 14' in das weitere zweite Kanalsegment 26' eingesteckt (von oben nach unten in Fig. 9).Dabei greift jeweils eine Lasche 120 der ersten Haltesegmente 100 (vgl. Fig. 7) in eine Nut 141' in dem weiteren ersten Kanalsegment 14'. Auch hier werden wieder Buchsen 36 eingesteckt.

Dann werden mehrere in Umfangsrichtung verteilte zweite Haltesegmente 200 in Axialrichtung der Gasturbine in das Gehäuseelement 12 eingeführt (von rechts nach links in Fig. 5). Dabei greift jeweils eine Lasche der zweiten Haltesegmente 200 in eine Nut 140' in dem weiteren ersten Kanalsegment 14' (vgl. Fig. 9), wie dies vorstehend mit Bezug auf Fig. 8 und das erste Haltesegmente 100 erläutert wurde.

Anschließend werden die zweiten Haltesegmente 200 radial von außen (von oben nach unten in Fig. 9) mit dem Gehäuseelement 12 verschraubt und Deckel und Hebelelement montiert.

Diese Montageschritte können in gleicher Weise für weitere Stufen der Leiteinrichtung wiederholt werden. Die Ausführungsform der Fig. 4 zeigt exemplarisch andere weitere erste Kanalsegmente 14", die durch die zweiten Haltesegmente 200 in gleicher Weise mit dem Gehäuseelement 12 verbunden (worden) sind wie vorstehend mit Bezug auf die weiteren ersten Kanalsegmente 14' und die ersten Haltesegmente 100 erläutert.

Diese anderen weiteren ersten Kanalsegmente 14" sind auf ihrer einer Austrittsöffnung 400 des Gehäuseelements 12 zugewandten Seite durch ein in Umfangsrichtung ungeteiltes drittes Haltesegment 300 in analoger Weise mit dem Gehäuseelement 12 verbunden (worden) wie vorstehend mit Bezug auf die ersten Kanalsegmente 14 und die ersten Haltesegmente 100 bzw. die weiteren ersten Kanalsegmente 14 ' und die zweiten Haltesegmente 200 erläutert.

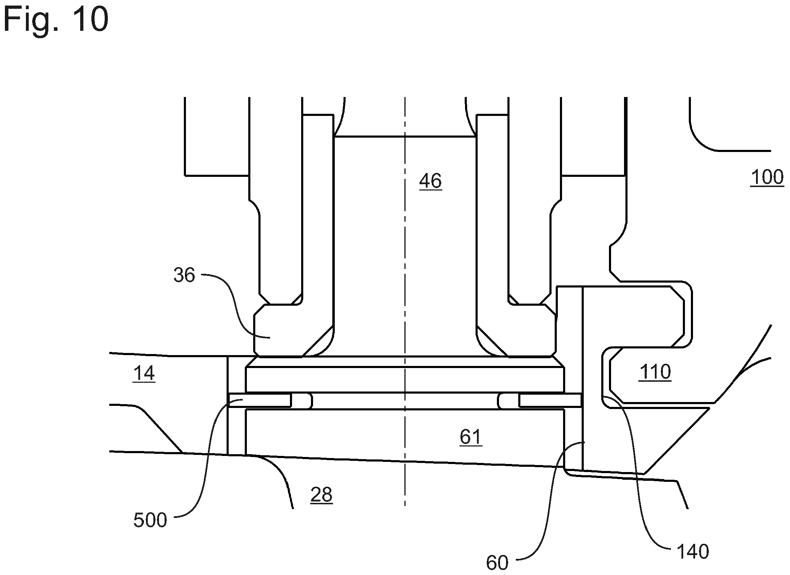

Fig. 10 zeigt eine Ausschnittsvergrößerung der Leiteinrichtung im Bereich einer Durchgangsöffnung 60 in einem ersten Kanalsegment 14. Man erkennt, dass in dem Spalt zwischen der Durchgangsöffnung 60 und einem diese Durchgangsöffnung durchgreifenden Teller 61 der Leitschaufel 28 eine geteilte, Dichtscheibe 500 angeordnet ist.Obwohl in der vorhergehenden Beschreibung exemplarische Ausführungen erläutert wurden, sei darauf hingewiesen, dass eine Vielzahl von Abwandlungen möglich ist.

So können insbesondere in der Ausführung der Fig. 4-10 anstelle eines oder mehrerer der in Umfangsrichtung ungeteilten zweiten Kanalsegmente 26, 26' mit der daran fest angeordneten Wabendichtung auch jeweils mehrere in Umfangsrichtung verteilte zweite Kanalsegmente und/oder ein über eine Speichenzentrierung an dem einstückigen oder den in Umfangsrichtung verteilten zweiten Kanalsegment(en) gehaltener Dichtring 70 vorgesehen sein, wie dies mit Bezug auf Fig. 1-3 erläutert wurde.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Leiteinrichtung
- 12: Gehäuseelement
- 14: erstes Kanalsegment
- 14': weiteres erstes Kanalsegment
- 14": anderes weiteres erstes Kanalsegment
- 16: Kanal
- 18: Rotor
- 20: Drehachse
- 22: Laufscheibe
- 24: Laufradschaufel
- 26: zweites Kanalsegment
- 26': weiteres zweites Kanalsegment
- 28: Leitschaufel
- 28': weitere Leitschaufel
- 30: Drehachse
- 30': weitere Drehachse
- 32: Koppeleinrichtung
- 34: Durchgangsöffnung
- 36: Buchse
- 38: Zapfen
- 40: Durchgangsöffnung
- 42: Stift
- 44: Nut
- 46: Zapfen
- 48: Außenseite
- 50: Außengewinde
- 52: Mutter
- 54: Teilbereich
- 56: Stopfdichtung
- 58: Wandungsbereich
- 60: Durchgangsöffnung
- 61: Teller
- 62: vordere Nut
- 64: hintere Nut
- 66: Lasche
- 68: Lasche
- 70: Dichtring
- 72: Seite
- 74: Abstimmscheibe
- 76: Hebelelement
- 77: Deckel
- 78: Nut
- 80: Ringraum-Konturierung
- 82: Seite
- 100: erstes Haltesegment
- 110, 120: Lasche
- 140, 140', 141': Nut
- 200: zweites Haltesegment
- 300: drittes Haltesegment
- 400: Austrittsöffnung
- 500: geteilte Dichtscheibe

## Patentansprüche

1. Leiteinrichtung (10) für eine Gasturbine, insbesondere für ein Flugtriebwerk,
mit wenigstens einem Gehäuseelement (12), mit wenigstens einem in radialer Richtung innenseitig des Gehäuseelements (12) angeordneten, ersten Kanalsegment (14), durch welches zumindest ein von einem Gas durchströmbarer Kanal (16) in radialer Richtung nach außen wenigstens teilweise begrenzt ist,
mit wenigstens einem in radialer Richtung innenseitig des ersten Kanalsegments (14) angeordneten, zweiten Kanalsegment (26), durch welches der Kanal (16) in radialer Richtung nach innen wenigstens teilweise begrenzt ist, und
mit wenigstens einer zumindest teilweise in dem Kanal (16) angeordneten Leitschaufel (28), welche relativ zu dem Gehäuseelement (12) und relativ zu den Kanalsegmenten (14, 26) um eine Drehachse (30) drehbar ist, und in dem Gehäuseelement (12) über eine Buchse (36) gelagert ist und das erste Kanalsegment (14) in einer Durchgangsöffnung (60) durchdringt,
**dadurch gekennzeichnet,**
**dass** die Leiteinrichtung wenigstens ein erstes Haltesegment (68; 100) aufweist, das radial mit dem Gehäuseelement (12) verschraubt ist und durch das das erste Kanalsegment (14) lösbar mit dem Gehäuseelement (12) verbunden ist.

2. Leiteinrichtung (10) nach Anspruch 1,
**dadurch gekennzeichnet.**
**dass** wenigstens ein weiteres erstes Kanalsegment (14') von dem einen ersten Kanalsegment (14) in Axialrichtung der Gasturbine beabstandet ist, und
**dass** wenigstens eine weitere Leitschaufel (28') relativ zu dem weiteren ersten Kanalsegment (14') um eine von der einen Drehachse (30) in Axialrichtung der Gasturbine beabstandete weitere Drehachse (30') drehbar ist, und
**dass** das weitere erste Kanalsegment (14') durch das erste Haltesegment (100) und wenigstens ein zweites Haltesegment (200) lösbar mit dem Gehäuseelement (12) verbunden ist.

3. Leiteinrichtung (10) nach einem der vorhergehenden Ansprüche,
**dadurch gekennzeichnet,**
**dass** ein einer Austrittsöffnung (400) des Gehäuseelements nächstes erstes Kanalsegment (14; 14") durch wenigstens ein drittes Haltesegment (68; 300) lösbar mit dem Gehäuseelement (12) verbunden ist.

4. Leiteinrichtung (10) nach Anspruch 3 4 ,
**dadurch gekennzeichnet,**
**dass** das dritte Haltesegment (300), durch das das der Austrittsöffnung (400) nächste erste Kanalsegment (14") mit dem Gehäuseelement (12) verbunden ist, in dessen Umfangsrichtung ungeteilt ist.

5. Leiteinrichtung (10) nach einem der vorhergehenden Ansprüche,
**dadurch gekennzeichnet,**
**dass** das Haltesegment (68; 100, 200, 300), durch das ein erstes Kanalsegment (14, 14', 14") mit dem Gehäuseelement (12) verbunden ist, auf einer einer Austrittsöffnung (400) des Gehäuseelements zugewandten Seite dieses ersten Kanalsegments angeordnet ist.

6. Leiteinrichtung (10) nach einem der vorhergehenden Ansprüche,
**dadurch gekennzeichnet,**
**dass** das zweite Kanalsegment (26) an der Leitschaufel (28) befestigt und an dem Gehäuseelement (12) über die Leitschaufel (28) gehalten ist, welche an dem Gehäuseelement (12) über eine in radialer Richtung von außen nach innen in eine Durchgangsöffnung (34) des Gehäuseelements (12) eingesteckte Buchse (36) gelagert ist..

7. Leiteinrichtung (10) nach einem der vorhergehenden Ansprüche,
**dadurch gekennzeichnet, dass**
das Haltesegment (68; 100, 200, 300), durch das das erste Kanalsegment (14, 14', 14") mit dem Gehäuseelement (12) verbunden ist, reibschlüssig mit diesem ersten äußeren Kanalsegment verbunden ist.

8. Leiteinrichtung (10) nach Anspruch 7,
**dadurch gekennzeichnet, dass**
eine Lasche (68; 110, 120) dieses Haltesegments in eine Nut (64; 140, 140', 141') in diesem ersten Kanalsegment, insbesondere in Axialrichtung der Gasturbine, eingreift oder eine Lasche dieses ersten Kanalsegments in eine Nut in diesem Haltesegment, insbesondere in Axialrichtung der Gasturbine, eingreift.

9. Leiteinrichtung (10) nach einem der vorhergehenden Ansprüche, **gekennzeichnet durch**
eine, insbesondere geteilte, Dichtscheibe (500), die in einem Spalt zwischen einer Durchgangsöffnung (60) eines ersten Kanalsegments (14) und einem diese Durchgangsöffnung durchgreifenden Bereich (61) der Leitschaufel angeordnet ist.

10. Leiteinrichtung (10) nach einem der vorhergehenden Ansprüche,
**dadurch gekennzeichnet, dass**
an dem zweiten Kanalsegment (26) auf einer in radialer Richtung nach innen weisenden Seite (72) des zweiten Kanalsegments (26) wenigstens ein, insbesondere in dessen Umfangsrichtung ungeteilt ausgebildetes, Dichtungselement, insbesondere ein Dichtring (70), gehalten ist.

11. Leiteinrichtung (10) nach Anspruch 10,
**dadurch gekennzeichnet, dass**
das Dichtungselement über eine Speichenzentrierung an dem zweiten Kanalsegment (26) gehalten ist.

12. Gasturbine, insbesondere Flugtriebwerk, mit wenigstens einer Leiteinrichtung (10) nach einem der vorhergehenden Ansprüche.

13. Verfahren zur Montage einer Leiteinrichtung (10) nach einem der vorhergehenden Ansprüche, mit dem Schritt:
Verbinden des ersten Kanalsegments (14) mit dem Gehäuseelement (12) durch das erste Haltesegment (68; 100).

14. Verfahren nach Anspruch 13, mit dem nachfolgenden Schritt:
Verbinden des weiteren erstes Kanalsegments (14'), das von dem einen ersten Kanalsegment (14) in Axialrichtung der Gasturbine beabstandet ist, mit dem Gehäuseelement (12) durch das erste Haltesegment (100) und anschließend das zweite Haltesegment (200).

## Claims

1. Guide device (10) for a gas turbine, in particular for an aircraft engine, comprising at least one housing element (12), comprising at least one first channel segment (14) arranged on the inside of the housing element (12) in the radial direction, by means of which first channel segment at least one channel through which a gas can flow (16) is at least partially delimited outward in the radial direction, comprising at least one second channel segment (26) arranged on the inside of the first channel segment (14) in the radial direction, by means of which second channel segment the channel (16) is at least partially delimited inward in the radial direction, and comprising at least one guide vane (28) arranged in the channel (16) at least in part, which guide vane can be rotated about an axis of rotation (30) relative to the housing element (12) and relative to the channel segments (14, 26), and is mounted in the housing element (12) by means of a bushing (36) and penetrates the first channel segment (14) in a through-opening (60), **characterized in that** the guide device comprises at least one first holding segment (68; 100), which is screwed radially to the housing element (12) and by means of which the first channel segment (14) is detachably connected to the housing element (12).

2. Guide device (10) according to claim 1, **characterized in that** at least one further first channel segment (14') is spaced apart from the one first ch annel segment (14) in the axial direction of the gas turbine, and **in that** at least one further guide vane (28') is rotatable relative to the further first channel segment (14') about a further axis of rotation (30') which is spaced apart from the one axis of rotation (30) in the axial direction of the gas turbine, and **in that** the further first channel segment (14') is detachably connected to the housing element (12) by means of the first holding segment (100) and at least one second holding segment (200).

3. Guide device (10) according to eitherof the preceding claims, **characterized in that** a first channel segment (14; 14") closest to an outlet opening (400) of the housing element is detachably connected to the housing element (12) by means of at least on e third holding segment (68; 300).

4. Guide device (10) according to claim 3, **characterized in that** the third holding segment (300), by means of which the first channel segment (14") closest to the outlet opening (400) is connected to the housing element (12), is undivided in the circumferential direction thereof.

5. Guide device (10) according to any of the preceding claims, **characterized in that** the holding segment (68; 100, 200, 300) by means of which a first channel segment (14, 14', 14") is connected to the housing element (12) is arranged on a side of said first channel segment that faces an outlet opening (400) of the housing element.

6. Guide device (10) according to any of the preceding claims, **characterized in that** the second channel segment (26) is fastened to the guide vane (28) and is held on the housing element (12) by means of the guide vane (28), which is mounted on the housing element (12) by means of a bushing (36) that is inserted into a through-opening (34) of the housing element (12) from outside to inside in the radial direction.

7. Guide device (10) according to any of the preceding claims, **characterized in that** the holding segment (68; 100, 200, 300) by means of which the first channel segment (14, 14', 14") is connected to the housing element (12) is frictionally connected to said first outer channel segment.

8. Guide device (10) according to claim 7, **characterized in that** a tab (68; 110, 120) of said holding segment engages in a groove (64; 140, 140', 141') in said first channel segment, in particular in the axial direction of the gas turbine, or a tab of said first channel segment engages in a groove in said holding segment, in particular in the axial direction of the gas turbine.

9. Guide device (10) according to any of the preceding claims, **characterized by** an in particular divided sealing disk (500) which is arranged in a gap between a through - opening (60) of a first channel segment(14) and a region (61) of the guide vane engaging through said through-opening.

10. Guide device (10) according to any of the preceding claims, **characterized in that** at least one sealing element, which is in particular undivided in the circumferential direction thereof, in particular a sealing ring (70), is held on the second channel segment (26) on a side (72) of the second channel segment (26) facing inward in the radial direction.

11. Guide device (10) according to claim 10, **characterized in that** the sealing element is held on the second channel segment (26) by means of a centering spoke.

12. Gas turbine, in particular aircraft engine, comprising at least one guide device (10) according to any of the preceding claims.

13. Method for assembling a guide device (10) according to any of the preceding claims, comprising the following step:
connecting the first channel segment (14) to the housing element (12) by means of the first holding segment (68; 100).

14. Method according to claim 13, comprising the following step:
connecting the further first channel segment (14'), which is spaced apart from the first channel segment (14) in the axial direction of the gas turbine, to the housing element (12) by means of the first holding segment (100) and then the second holding segment (200).

## Revendications

1. Dispositif de guidage (10) destiné à une turbine à gaz, en particulier à un moteur d'avion, comportant au moins un élément de carter (12), au moins un premier segment de canal (14) disposé dans la direction radiale du côté intérieurde l'élément de carter(12) et délimitant au moins partiellement un canal (16) dans la direction radiale vers l'extérieur, lequel canal peut être traversé par un gaz,
le dispositif de guidage comportant au moins un second segment de canal (26) disposé dans la direction radiale du côté intérieur du premier segment de canal (14) et délimitant au moins partiellement le canal (16) dans la direction radiale vers l'intérieur,
et le dispositif de guidage comportant au moins une aube de guidage (28) disposée au moins partiellement dans le canal (16), laquelle aube de guidage peut tourner autour d'un axe de rotation (30) par rapport à l'élément de carter (12) et par rapportaux segments de canal (14, 26), et est montée dans l'élément de carter (12) par l'intermédiaire d'une douille (36), et traverse le premier segment de canal (14) parune ouverture de passage (60),
**caractérisé en ce que**
le dispositif de guidage présente au moins un premier segment de maintien (68 ; 100) qui est vissé radialement à l'élément de carter (12) et qui relie de manière amovible le premier segment de canal (14) à l'élément de carter (12).

2. Dispositif de guidage (10) selon la revendication 1,
**caractérisé en ce qu'**
au moins un autre premier segment de canal (14') est espacé du premier segment de canal (14) dans la direction axiale de la turbine à gaz,
**en ce qu'**au moins une autre aube de guidage (28') peut tourner autour d'un autre axe de rotation (30') espacé d'un premier axe de rotation (30) dans la direction axiale de la turbine à gaz par rapport à l'autre premier segment de canal (14'), et
**en ce que** l'autre premier segment de canal (14') est relié de manière amovible à l'élément de carter (12) par le premier segment de maintien (100) et par au moins un deuxième segment de maintien (200).

3. Dispositif de guidage (10) selon l'une des revendications précédentes,
**caractérisé en ce qu'**
un premier segment de canal (14 ; 14"), lequel est le plus proche d'une ouverture de sortie (400) de l'élément de carter, est relié de manière amovible à l'élément de carter (12) par au moins un troisième segment de maintien (68 ; 300).

4. Dispositif de guidage (10) selon la revendication 3,
**caractérisé en ce que**
le troisième segment de maintien (300), lequel relie le premier segmentde canal (14") à l'élément de carter (12), n'est pas divisé dans sa direction circonférentielle, lequel premier segment de canal est le plus proche de l'ouverture de sortie (400).

5. Dispositif de guidage (10) selon l'une des revendications précédentes,
**caractérisé en ce que**
le segment de maintien (68 ; 100, 200, 300), qui relie un premier segment de canal (14, 14', 14") à l'élément de carter (12), est disposé sur un côté de ce premier segment de canal, lequel côté fait face à une ouverture de sortie (400) de l'élément de carter.

6. Dispositif de guidage (10) selon l'une des revendications précédentes,
**caractérisé en ce que**
le second segment de canal (26) est fixé à l'aube de guidage (28) et est maintenu sur l'élément de carter (12) par l'intermédiaire de l'aube de guidage (28), laquelle aube de guidage est montée sur l'élément de carter (12) par l'intermédiaire d'une douille (36) enfichée, dans la direction radiale de l'extérieur vers l'intérieur, dans une ouverture de passage (34) de l'élément de carter(12).

7. Dispositif de guidage (10) selon l'une des revendications précédentes,
**caractérisé en ce que**
le segment de maintien (68 ; 100, 200, 300), qui relie le premier segment de canal (14, 14', 14") à l'élément de carter (12), est relié par friction à ce premier segment de canal externe.

8. Dispositif de guidage (10) selon la revendication 7,
**caractérisé en ce qu'**
une languette (68 ; 110, 120) de ce segment de maintien s'insère dans une rainure (64 ; 140, 140', 141') dans ce premier segment de canal, en particulier dans la direction axiale de la turbine à gaz, ou **en ce qu'**une languette de ce premier segment de canal s'insère dans une rainure dans ce segment de maintien, en particulier dans la direction axia le de la turbine à gaz.

9. Dispositif de guidage (10) selon l'une des revendications précédentes,
**caractérisé par**
un disque d'étanchéité (500), en particulier divisé, disposé dans unefente entre une ouverture de passage (60) d'un premier segment de canal (14) et une région (61) de l'aube de guidage traversant cette ouverture de passage.

10. Dispositif de guidage (10) selon l'une des revendications précédentes,
**caractérisé en ce qu'**
au moins un élément d'étanchéité, en particulier une bague d'étanchéité (70), lequel élément d'étanchéité est réalisé de façon non divisée dans sa direction circonférentielle, est maintenu sur le second segment de canal (26) sur un côté (72) du second segment de canal (26), orienté dans la direction radiale vers l'intérieur.

11. Dispositif de guidage (10) selon la revendication 10,
**caractérisé en ce que**
l'élément d'étanchéité est maintenu sur le second segment de canal (26) par l'intermédiaire d'un centrage à rayons.

12. Turbine à gaz, en particulier moteur d'avion, comportant au moins un dispositif de guidage (10) selon l'une des revendications précédentes.

13. Procédé d'assemblage d'un dispositif de guidage (10) selon l'une des revendications précédentes, comportant l'étape :
de liaison du premier segment de canal (14) à l'élément de carter (12) par le premier segment de maintien (68 ; 100).

14. Procédé selon la revendication 13, comportant l'étape consécutive suivante :
de liaison de l'autre premier segment de canal (14') à l'élément de carter (12) par le premier segment de maintien (100) et ensuite par le deuxième segment de maintien (200), l'autre premier segment de canal étant espacé du premier segment de canal (14) dans la direction axiale de la turbine à gaz.
